# FASCICULE DE BREVET EUROPEEN

(11) **EP 1 634 488 B1**
(45) Date de publication et mention de la délivrance du brevet: **24.01.2007**
(21) Numéro de dépôt: 05291794.5
(22) Date de dépôt: 29.08.2005
(51) Int. Cl.: A01B 3/46

(54) **Chariot à roues de jauge et de transport et charrue réversible portée équipée d'un tel chariot**
Karren mit Lauf- und Transporträder und mit diesem ausgerüstete Aufsattelumkehrpflug
Dolly with support and transport wheels and reversible mounted-on plough equipped with it

(30) Priorité: 10.09.2004 FR 0409654
(43) Date de publication de la demande: 15.03.2006
(73) Titulaire: Etablissements Gregoire Besson et Cie, 49230 Montfaucon-sur-Moine (FR)
(72) Inventeur: Besson, Patrick, 44190 Getigne (FR); Pineau, Gilbert, 49230 Montigne sur Moine (FR)
(74) Mandataire: Laget, Jean-Loup

(56) Documents cités:
- EP-A- 0 499 556
- EP-A- 1 099 363
- FR-A- 1 006 709
- FR-A- 2 774 852
- US-A- 2 760 420
- US-A- 4 253 528

## Description

La présente invention concerne un chariot à roues de jauge et de transport pour charrue réversible portée et une charrue réversible portée équipée d'un tel chariot.

Associer une charrue à un chariot à roues éventuellement de jauge est connu à ceux versés dans cet art comme l'illustrent en particulier les brevets US-A-2.760.420, FR-A-1.006.709, EP-A-1.099.363, EP-A-0.499.556 et US-A-4.253.528.

Dans le cas particulier des charrues réversibles portées, du type comprenant une pluralité de couples de corps de labour montés symétriquement opposés sur une poutre commune agencée pour pouvoir être montée à pivotement de 180° sur un attelage trois points d'un tracteur, la poutre de telles charrues porte un couple de roues de jauge, montées à pivotement libre autour d'un axe de pivotement respectif, horizontal en position de travail. Les axes de pivotement des roues de jauge sont positionnés respectivement aux deux extrémités d'un bras oscillant autour d'un axe, également horizontal en position de travail. La poutre porte également une roue de transport montée à pivotement libre autour d'un axe horizontal en position de transport. Un exemple d'une telle charrue est notamment décrit par exemple dans le brevet FR-A-1.594.728.

L'utilisation de deux roues de jauge présente l'avantage que chacune des roues de jauge montée latéralement est utilisée avec un rang de corps de labour, ce qui élimine le recours à des pivots ou à des butées, tout en augmentant la durée de vie des pneumatiques. Cette charrue connue présente l'inconvénient de devoir prévoir une roue supplémentaire faisant office de roue de transport. La présence de cette troisième roue, qui en outre a une résistance insuffisante pour permettre un transport à des vitesses relativement élevées de l'ordre de 40 km/h, telles qu'autorisées aujourd'hui, constitue un inconvénient majeur résolu à travers le brevet FR-A-2.774.852. Dans ce document, les roues de jauge sont également utilisées comme roues de transport de la charrue de manière à permettre de limiter le nombre de roues équipant une telle charrue. Ainsi, chaque roue est affectée en jauge à chacune des positions de travail et les deux roues sont utilisées simultanément pour le transport. Le fait d'utiliser une seule roue pour chaque position de travail du sol oblige à la présence d'un grand nombre de butées comme l'illustre ce document. Ces butées sont destinées à limiter le déplacement angulaire du bras oscillant du chariot au cours du travail de la charrue. Le passage de la position de travail à la position de transport de la charrue nécessite de désactiver lesdites butées pour permettre un déplacement libre en pivotement du bras oscillant porte-roues autour de son axe de liaison à la poutre de la charrue. Cette opération est longue et fastidieuse. De la même manière, le passage d'une position de travail à une autre nécessite une modification du réglage des butées. Ces butées sont formées d'organes mécaniques exposés aux projections de boue et aux mottes de terre tombant de la charrue lors du processus de retournement. Cela empêche souvent le bon fonctionnement des systèmes de butées, favorise le grippage et d'une manière générale, gène les mécanismes de la roue.

Un but de la présente invention est donc de perfectionner le chariot à roues de jauge et de transport pour charrue réversible semi-portée ou portée décrit dans le brevet FRA-2.774.852 en proposant une conception du chariot permettant de supprimer les butées limitant le débattement angulaire du bras porte-roues en position de travail de la charrue sans nuire à la possibilité d'utiliser un tel chariot pour des vitesses-de transport élevées de la charrue et obtenir un réglage de la profondeur de terrage extrêmement simple et performant.

A cet effet, l'invention a pour objet un chariot à roues de jauge et de transport pour charrue réversible portée, ladite charrue comprenant une pluralité de couples de corps de labour montés symétriquement opposés sur une poutre commune agencée pour pouvoir être montée à pivotement de 180° sur un attelage d'un tracteur, ledit chariot étant constitué d'un bras porte-roues oscillant autour d'un axe destiné à être solidarisé à la poutre de la charrue, cet axe étant orienté, sensiblement horizontalement, en position de travail de la charrue, et orienté sensiblement verticalement en position de transport de la charrue, le changement de position étant obtenu par pivotement quart de tour de la poutre de la charrue, les roues du bras étant reliées de manière articulée au bras oscillant pour pouvoir occuper notamment deux positions, l'une, dite de transport, dans laquelle les axes des roues s'étendent orthogonalement à l'axe d'oscillation du bras, l'autre, dite de travail du sol, dans laquelle les axes des roues s'étendent parallèlement à l'axe d'oscillation du bras, caractérisé en ce que le chariot présente, dans la position de travail, des roues sensiblement alignées, en tandem, pour venir simultanément en appui roulant au sol.

Grâce au fait qu'en position de travail, les deux roues de jauge viennent simultanément en appui roulant au sol, le soulèvement de la charrue par rapport au niveau du sol est réduit en particulier lors du franchissement d'obstacles, ce qui permet d'accroître l'efficacité de travail de ladite charrue. Par ailleurs, du fait que les roues agissent simultanément et remplissent toutes les deux le rôle de roue de jauge, il n'est plus nécessaire de disposer de butée limitant le déplacement angulaire du bras. Ceci facilite le repositionnement du bras, en particulier lors du retournement des corps de labour de la charrue permettant le passage d'une position de travail à une autre. Enfin, lorsque l'écartement entre les roues est important, le chariot présente une stabilité accrue en position travail.

L'invention a encore pour objet une charrue réversible portée, caractérisée en ce qu'elle est munie d'un chariot du type précité.

L'invention sera bien comprise à la lecture de la description suivante d'exemples de réalisation, en référence aux dessins annexés dans lesquels :
la figure 1 représente une vue d'ensemble d'une charrue équipée d'un chariot conforme à l'invention en position de travail de ladite charrue;
la figure 2 représente une vue de dessus de la figure 1 ;
la figure 3 représente une vue d'ensemble en perspective de la charrue en position de transport ;
la figure 4 représente une vue d'ensemble en perspective du chariot en position de travail et
les figures 5 et 6 représentent des vues en perspective du chariot en position de transport.

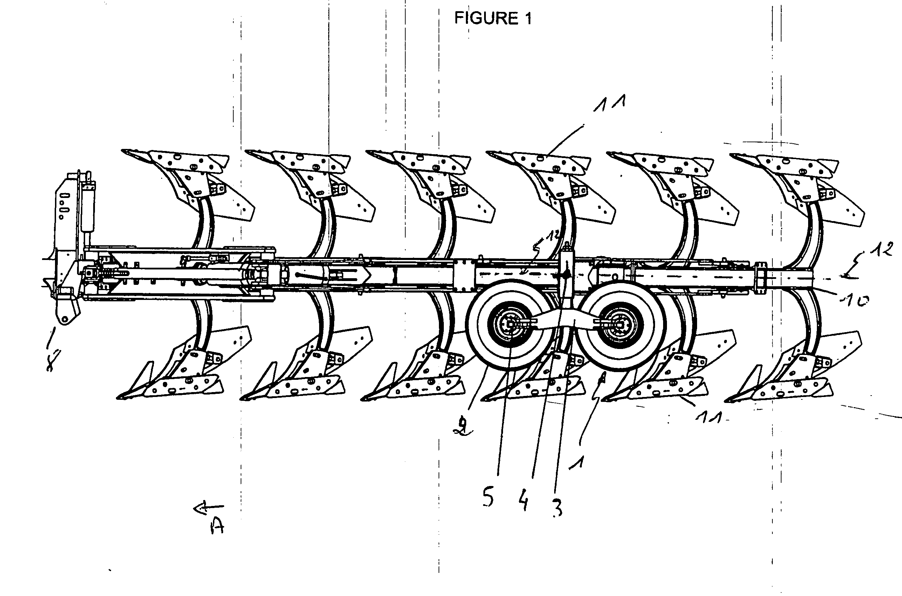

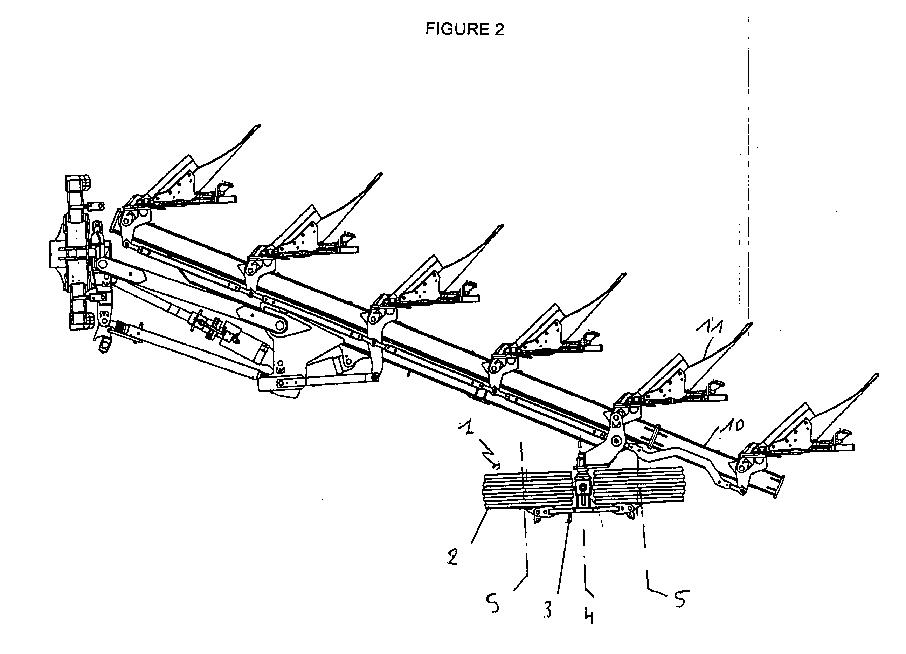

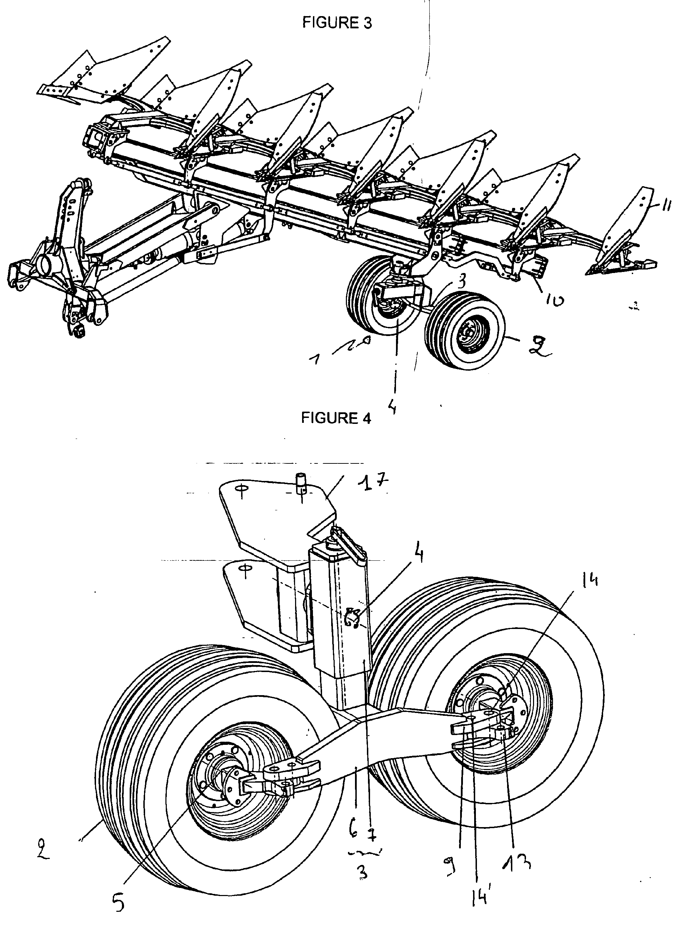

Comme mentionné ci-dessus, le chariot 1 à roues 2 de jauge et de transport, objet de l'invention, est destiné à une charrue réversible portée ou semi-portée. Cette charrue comprend une pluralité de couples de corps 11 de labour montés symétriquement opposés sur une poutre 10 commune agencée pour pouvoir être montée à pivotement de 180° sur un attelage trois points d'un tracteur. Le chariot 1 est constitué d'un bras 3 porte-roues 2 oscillant autour d'un axe 4 solidarisé à la poutre 10 de la charrue. Cet axe 4 est orienté, sensiblement horizontalement, en position de travail de la charrue, comme l'illustrent les figures 1, 2 et 4, tandis qu'il est orienté sensiblement verticalement en position de transport de la charrue. Cette position de transport est plus particulièrement représentée aux figures 3, 5 et 6. Le changement de position pour le passage de la position de transport à la position de travail ou inversement est obtenu par pivotement quart de tour de la poutre 10 de la charrue. Dans la position de transport, les corps de labour sont ainsi alignés suivant un plan sensiblement horizontal tandis qu'en position de travail, chaque corps d'un couple de corps coopère avec les autres corps pour former un rang de corps. Les deux rangs de corps de labour ainsi formés sont positionnés l'un au-dessus de l'autre d'un côté de la poutre 10 de charrue tandis que le chariot est positionné sur le côté opposé de ladite poutre 10.

Dans les exemples représentés, la poutre 1 porte six couples de corps 11 de labour disposés symétriquement opposés et pouvant venir, pour une ligne ou un rang de corps, en contact avec le sol pour une position de travail à droite dans la figure 1 par rapport à la direction d'avancement A et par pivotement de la poutre de 180° sur l'avant train 8 autour de son axe en une seconde position de travail (à gauche) non représentée. Le passage d'une position de travail à une autre est encore appelé retournement des corps.

Pendant le travail, la profondeur d'enfoncement d'un rang de corps 11 de labour ou soc est limitée par les roues 2 de jauge roulant sur le sol non labouré. En position de transport (figure 3), la poutre 1 a pivoté de 90° de sorte que les couples de corps de labour sont alignés horizontalement par couple au-dessus de la poutre 1. Les roues 2 de jauge servent alors de roue de transport. Cette position ne sera pas décrite plus en détail car elle est bien connue à ceux versés dans cet art.

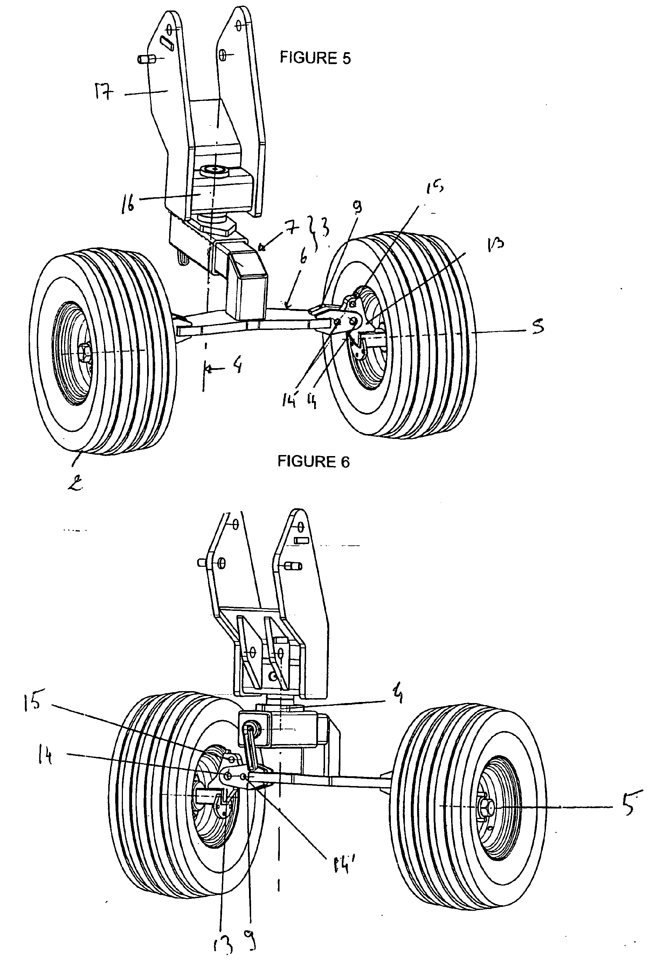

De manière également en soi connue, les roues 2 de jauge sont montées folles aux deux extrémités du bras 3 oscillant, respectivement autour d'axes horizontaux représentés en 5 aux figures. Le bras 3 oscillant est pour sa part monté à pivotement autour de l'axe 4 mentionné ci-dessus par l'intermédiaire d'un palier 16 solidaire d'un support 17 fixé sur la poutre 1 par des boulons traversant des orifices de fixation du support. Le bras 3 porte-roues 2 est donc ainsi apte à pivoter autour de l'axe 4, orienté sensiblement horizontalement, en position de travail de la charrue, et sensiblement verticalement, en position de transport de la charrue. Les roues 2 de jauge du bras 3 oscillant sont quant à elles reliées de manière articulée au bras 3 oscillant pour pouvoir occuper notamment deux positions, l'une, dite de transport, dans laquelle les axes 5 des roues 2 s'étendent orthogonalement à l'axe 4 d'oscillation du bras 3 comme l'illustre la figure 5, l'autre, dite de travail du sol, dans laquelle les axes 5 des roues 2 s'étendent parallèlement à l'axe 4 d'oscillation du bras 3 comme l'illustre notamment la figure 4. Ainsi, ces roues 2 de jauge peuvent être disposées orthogonales au bras oscillant qui les porte, ce bras oscillant devenant un essieu porteur qui forme, grâce aux deux roues qu'il porte, un train de support de la charrue en position de transport. Comme l'illustre la figure 3, ce train de support de la charrue est extrêmement efficace pour des charrues lourdes et autorise des vitesses de transport relativement élevées. A l'inverse, en position de travail, les roues 2 sont disposées sensiblement alignées l'une derrière l'autre, dans le sens d'avancement de la charrue. Ces roues 2 forment ainsi un tandem pour venir simultanément en appui roulant au sol.

Pour permettre ainsi le passage des roues d'une position à une autre, les axes 5 des roues 2, qui portent lesdites roues 2, sont montés respectivement dans des chapes 13, élles-mêmes montées articulées dans des joues 9 disposées aux extrémités respectives du bras 3 oscillant. Les chapes 13 comportent une partie plane munie de trous, dont l'un est représenté en 15 aux figures. Les joues 9 portent quant à elles des trous14, 14' destinés à s'aligner avec des trous de la chape 13 pour permettre, en position de travail, le maintien des axes 5 des roues 2 parallèles à l'axe 4 oscillant et, en position de transport, le maintien des axes 5 des roues orthogonaux à l'axe 4 d'oscillation. Le maintien des roues dans chacune des positions s'effectue par l'intermédiaire de broches s'enfilant à travers les trous positionnés en regard des joues 9 et de la chape 13. A nouveau, ce fonctionnement ne sera pas décrit plus en détail car il est notamment décrit dans le brevet FR-A-2.774.852. Il doit être noté que le passage des roues de la position transport à la position travail peut également s'effectuer à l'aide de vérins hydrauliques.

Dans cette position de travail de la charrue, où l'axe 5 des roues est disposé sensiblement parallèle à l'axe 4 d'oscillation du bras 3, le bras 3 oscillant porte-roues 2 est monté à pivotement libre sur l'axe 4 de liaison du bras 3 à la poutre 10 de la charrue. Ce bras 3 oscillant porte-roues 2 est ainsi animé d'un mouvement pendulaire lors du travail dans le sol des corps 11 de labour, ce qui accroît l'efficacité du travail de la charrue. De préférence, les axes de roues sont écartés d'une distance minimale au moins égale au diamètre d'une roue, et au maximum, d'une distance permettant le bon fonctionnement des roues jockey lors du transport pour accroître la stabilité du chariot. Ce montage à pivotement libre du bras 3 oscillant porte-roues 2 sur l'axe 4 de liaison du bras 3 à la poutre 10 de la charrue permet en outre au bras 3 oscillant porte-roues 2 de se repositionner automatiquement par inertie lors du retournement des corps 11 de labour de la charrue. Ainsi, lors du passage d'une position de travail à une autre de la charrue, comme représenté à la figure 1, le chariot tend à pivoter autour de son axe 4 pour venir, sous l'effet de son propre poids, se repositionner dans une position dans laquelle les roues 2 du chariot viennent simultanément en appui roulant au sol. Pour permettre un repositionnement automatique du chariot lors d'un retournement des corps, il est impératif que l'axe 4 d'oscillation du bras 3 soit aligné sur l'axe 12 longitudinal médian de la poutre 10 de charrue en-position de travail. Ainsi, aucun réglage n'est nécessaire lors du retournement des corps.

Dans les exemples représentés, le bras 3 est constitué de deux éléments principaux, une poutre 6 de liaison des roues 2 entre elles et une potence 7 orthogonale à ladite poutre. Cette potence 7 est de longueur réglable pour permettre le réglage du terrage des corps 11 de labour de la charrue. Pour permettre ce réglage du terrage, la potence 7 est constituée de deux éléments montés à emboîtement télescopique et reliés l'un à l'autre par l'intermédiaire d'un vérin qui peut être mécanique ou hydraulique. Ce vérin peut être actionné par l'intermédiaire d'un bras de manivelle représenté aux figures. Il est à noter que d'autres modes de réalisation du bras 3 oscillant peuvent être envisagés de manière équivalente. Ainsi, le bras 3 peut affecter la forme d'un V, l'axe 4 de liaison du bras à la poutre 10 de charrue étant positionné à la pointe du V, les branches du V étant de longueur réglable.

Grâce à la conception d'un tel chariot, toutes les butées nécessaires jusqu'à présent au fonctionnement d'un tel chariot sont supprimées. La mécanique d'un tel chariot est devenue extrêmement simple puisque le mouvement de pivotement du chariot n'est désormais plus limité et permet au contraire un passage automatique de la charrue d'une position de travail à une autre position de travail sans avoir à déverrouiller et à repositionner un quelconque organe. Il en résulte une simplicité de l'ensemble. L'entraînement en pivotement des roues pour leur passage d'une position de travail à la position de transport peut quant à lui s'effectuer manuellement ou de manière hydraulique. Il suffit de remplacer le système de verrouillage constitué de broches par un système de vérin.

## Revendications

1. Chariot (1) à roues (2) de jauge et de transport pour charrue réversible portée, ladite charrue comprenant une pluralité de couples de corps (11) de labour montés symétriquement opposés sur une poutre (10) commune agencée pour pouvoir être montée à pivotement de 180° sur un attelage d'un tracteur, ledit chariot (1) étant constitué d'un bras (3) porte-roues (2) oscillant autour d'un axe (4) destiné à être solidarisé à la poutre (10) de la charrue, cet axe (4) étant orienté, sensiblement horizontalement, en position de travail de la charrue, et orienté sensiblement verticalement en position de transport de la charrue, le changement de position étant obtenu par pivotement quart de tour de la poutre (10) de la charrue, les roues (2) du bras (3) étant reliées de manière articulée au bras (3) oscillant pour pouvoir occuper notamment deux positions, l'une, dite de transport, dans laquelle les axes (5) des roues (2) s'étendent orthogonalement à l'axe (4) d'oscillation du bras (3), l'autre, dite de travail du sol, dans laquelle les axes (5) des roues (2) s'étendent parallèlement à l'axe (4) d'oscillation du bras (3),
**caractérisé en ce que** le chariot (1) présente, dans la position de travail, des roues (2) sensiblement alignées, en tandem, pour venir simultanément en appui roulant au sol.

2. Chariot (1) selon la revendication 1,
**caractérisé en ce que** le bras (3) oscillant porte-roues (2) est monté à pivotement libre sur l'axe (4) de liaison du bras (3) à la poutre (10) de la charrue pour être animé d'un mouvement pendulaire lors du travail dans le sol des corps (11) de labour et se repositionner automatiquement par inertie, lors du retournement des corps (11) de labour de la charrue.

3. Chariot (1) selon l'une des revendications 1 et 2,
**caractérisé en ce que** le bras (3) est constitué de deux éléments principaux, une poutre (6) de liaison des roues (2) entre elles et une potence (7) orthogonale à ladite poutre, cette potence (7) étant de longueur réglable pour permettre le réglage du terrage des corps (11) de labour de la charrue.

4. Chariot (1) selon la revendication 3,
**caractérisé en ce que** ladite potence (7) est constituée de deux éléments montés à emboîtement télescopique et reliés l'un à l'autre par l'intermédiaire d'un vérin.

5. Chariot (1) selon l'une des revendications 1 à 4,
**caractérisé en ce que** l'axe (4) d'oscillation du bras (3) est aligné sur l'axe (12) longitudinal médian de la poutre (10) de charrue en position de travail.

6. Charrue réversible portée,
**caractérisée en ce qu'**elle est munie d'un chariot (1) selon l'une des revendications 1 à 5.

## Claims

1. Trailer (1) provided with running and transporting wheels (2) for a supported reversible plough, said plough including a plurality of pairs of ploughing bodies (11) mounted symmetrically opposite to one another on a common beam (10) designed to be able to be mounted so as to pivot through 180° on a towing attachment of a tractor, said trailer (1) comprising an arm (3) for wheel carriers (2) oscillating about an axis (4) intended to be integral with the beam (10) of the plough, this axis (4) being orientated, substantially horizontally, in the working position of the plough, and orientated substantially vertically in the transportation position of the plough, the change in position being obtained by pivoting the beam (10) of the plough a quarter turn, the wheels (2) of the arm (3) being connected in an articulated manner to the oscillating arm (3) in order to be able to occupy more especially two positions, one position, called the transportation position, in which the axles (5) of the wheels (2) extend orthogonally to the oscillation axis (4) of the arm (3), and the other position, called the ground-working position, in which the axles (5) of the wheels (2) extend parallel to the oscillation axis (4) of the arm (3), **characterised in that** the trailer (1) has, in the working position, wheels (2) which are substantially aligned, in tandem, for simultaneous support when travelling on the ground.

2. Trailer (1) according to claim 1, **characterised in that** the oscillating arm (3) for wheel carriers (2) is mounted in a freely pivotal manner on the axis (4) for connecting the arm (3) to the beam (10) of the plough in order to be driven by a pendular movement when the ploughing bodies (11) are working in the ground, and to reposition themselves automatically, by inertia, when the ploughing bodies (11) of the plough return.

3. Trailer (1) according to one of claims 1 and 2, **characterised in that** the arm (3) comprises two principal elements, a beam (6) for interconnecting the wheels (2), and a bracket (7) orthogonal to said beam, this bracket (7) being of an adjustable length in order to permit the adjustment of the ground penetration of the ploughing bodies (11) of the plough.

4. Trailer (1) according to claim 3, **characterised in that** said bracket (7) comprises two elements mounted in a telescopically fitting manner and connected one to the other through the intermediary of a jack.

5. Trailer (1) according to one of claims 1 to 4, **characterised in that** the oscillation axis (4) of the arm (3) is aligned with the median longitudinal axis (12) of the plough beam (10) in the working position.

6. Supported reversible plough, **characterised in that** it is provided with a trailer (1) according to one of claims 1 to 5.

## Patentansprüche

1. Wagen (1) mit Lauf- und Transporträdern (2) für einen Aufsattelumkehrpflug, der mehrere Paare von Pflugkörpern (11) umfasst, die symmetrisch entgegengesetzt an einem gemeinsamen Träger (10) befestigt sind, der so gestaltet ist, dass er um 180° drehbeweglich an einer Zugvorrichtung eines Traktors befestigt werden kann, wobei der Wagen (1) einen die Räder (2) tragenden Arm (3) hat, der um eine Achse (4) verschwenkbar ist und dafür vorgesehen ist, mit dem Träger (10) des Wagens verbunden zu werden, wobei die Achse (4) in der Arbeitsposition des Wagens im Wesentlichen horizontal ausgerichtet ist und in der Transportposition des Wagens im Wesentlichen vertikal ausgerichtet ist, wobei die Positionsänderung durch eine Vierteldrehung des Trägers (10) des Wagens erreicht wird, wobei die Räder (2) mit dem Arm (3) gelenkig verbunden sind, um insbesondere zwei Positionen einnehmen zu können, eine Transportposition, in der sich die Achsen (5) der Räder (2) senkrecht zur Schwenkachse (4) des Armes (3) erstrecken, und eine Arbeitsposition, in der sich die Achsen (5) der Räder (2) parallel zu der Schwenkachse (4) des Armes (3) erstrecken, **dadurch gekennzeichnet, dass** der Wagen (1) in der Arbeitsposition im Wesentlichen hintereinander ausgerichtete Räder (2) hat, die beim Laufen auf dem Boden gleichzeitig zur Auflage kommen.

2. Wagen (1) nach Anspruch 1, **dadurch gekennzeichnet, dass** der die Räder (2) tragende Arm (3) in der Achse (4) der Verbindung des Armes (3) mit dem Träger (10) des Wagens frei beweglich befestigt ist, so dass er durch eine Pendelbewegung bei der Bearbeitung des Bodens durch die Pflugkörper (11) bewegt wird und aufgrund der Trägheit beim Anheben der Pflugkörper (11) des Wagens automatisch in seine Ausgangsposition zurückkehrt.

3. Wagen (1) nach einem der Ansprüche 1 und 2, **dadurch gekennzeichnet, dass** der Arm (3) aus zwei Hauptelementen besteht, einem Träger (6) für die Verbindung der Räder (2) untereinander und einem Ausleger (7), der senkrecht zu dem Träger steht und in der Länge verstellbar ist, damit die Arbeitstiefe der Pflugkörper (11) des Wagens eingestellt werden kann.

4. Wagen (1) nach Anspruch 3, **dadurch gekennzeichnet, dass** der Ausleger (7) aus zwei Elementen besteht, die teleskopisch ineinander gesteckt und über einen Zylinder miteinander verbunden werden.

5. Wagen (1) nach einem der Ansprüche 1 bis 4, **dadurch gekennzeichnet, dass** die Schwenkachse (4) des Armes (3) in der Längsmittelachse (12) des Trägers (10) des Wagens in Arbeitsposition ausgerichtet ist.

6. Aufsattelumkehrflug, **dadurch gekennzeichnet, dass** er mit einem Wagen (1) nach einem der Ansprüche 1 bis 5 ausgerüstet ist.
